Europäisches Patentamt

(19) European Patent Office

Office européen des brevets

(11) Publication number: **0 009 653**
**B1**

# EUROPEAN PATENT SPECIFICATION

(45) Date of publication of patent specification: **19.01.83**

(51) Int. Cl.³: **H 01 B 3/30, C 09 D 3/66**

(21) Application number: **79103318.6**

(22) Date of filing: **06.09.79**

(54) Compositions of polyesters and polyester-amide imides used for wire enamels.

(30) Priority: **15.09.78 US 942578**

(43) Date of publication of application:
**16.04.80 Bulletin 80/8**

(45) Publication of the grant of the patent:
**19.01.83 Bulletin 83/3**

(84) Designated Contracting States:
**CH DE FR GB IT**

(56) References cited:
**FR - A - 2 240 942**
**US - A - 3 345 429**

(73) Proprietor: **WESTINGHOUSE ELECTRIC CORPORATION**
**Westinghouse Building Gateway Center**
**Pittsburgh Pennsylvania 15222 (US)**

(72) Inventor: **Sattler, Frank Anton**
**120 Jamison Lane**
**Monroeville, Pennsylvania (US)**
Inventor: **Kwiecinski, James Robert**
**1000 Elizabeth Street**
**Pittsburgh, Pennsylvania (US)**

(74) Representative: **Stratmann, Ernst, Dr.-Ing.**
**Schadowplatz 9**
**D-4000 Düsseldorf 1 (DE)**

Courier Press, Leamington Spa, England.

Compositions of polyesters and polyester-amide imides used for wire enamels

Polyester-amide-imide wire enamels which are used commercially are high molecular weight, high viscosity, difficultly soluble polymers requiring strong, noxious solvents in large quantities, not only for application to wire, but also for proper reaction in the kettle. One widely used commercial polyester-amide-imide wire enamel is made by blending four reaction products (see U.S.—A—3,555,113):

(1) a polyester-amide-imide with high amide-imide content (which requires a high solvent content, specifically cresylic acid, in the reaction kettle to keep the reaction mixture mobile during critical periods of the reaction);

(2) a polyester;

(3) a polyurethane blocked isocyanate; and

(4) a low molecular weight phenolic resin. The final resin is dissolved to 25% to 30% solids in a cresylic acid-aromatic hydrocarbon solvent mixture. The effluent from the stoving of this wire enamel is ecologically unacceptable and must be burned in an incinerator.

US—A—Specification No. 4,117,032 (Kwiecinski), discloses a wire-coating powder prepared by first formulating a solventless aromatic polyester-amide-imide. Excess polyol is used to replace the solvent.

Accordingly, the present invention resides in a polyester-amide-imide wire enamel blend characterized in that said blend comprises: (A) a solution in a carbitol of a cross-linkable polyester comprising the reaction product of: (1) a polyol which is a mixture of a diol and a triol; (2) a polyfunctional carboxylic compound at least 80% by weight selected from terephthalic acid, isophthalic acid, alkyl esters of terephthalic acid or isophthalic acid up to $C_3$, and mixtures thereof; (3) a catalyst; (B) a solution in a carbitol of a linear polyester comprising the reaction product of: (1) a diol; (2) a carboxylic compound at least 80% by weight selected from terephthalic acid, isophthalic acid, alkyl esters up to $C_3$ of terephthalic acid or isophthalic acid, and mixtures thereof; (3) a catalyst; and a solution in a carbitol of a polyester-amide-imide component comprising the reaction product of: (1) a polyester which comprises the reaction product of (a) a polyol which is a mixture of a diol and a triol; (b) a polyfunctional carboxylic compound at least 80% by weight selected from terephthalic acid, isophthalic acid, alkyl esters up to $C_3$ of terephthalic acid or isophthalic acid, and mixtures thereof; (c) a catalyst; (2) a diamine; and, (3) trimellitic anydride; and, said polyester-amide-imide wire enamel blend also containing a $C_{12}$—$C_{18}$ monocarboxylic unsaturated acid component which may be reacted into any of its polyester components.

We have found that a polyester-amide-imide wire enamel blend having excellent properties can be made at a very high solids concentration using an ecologically acceptable solvent. The solvents used in this invention are carbitols, which are high-boiling and ecologically acceptable solvents. The resin is applied to wire in the conventional manner and its properties on wire match those of good class 150°C to class 180°C conventional wire enamels.

The following is a description of the ingredients used in practicing this invention.

Solvent

The solvent is a carbitol and by the term "carbitol" we mean a diethylene glycol monoalkyl ether or a diethylene glycol monoalkyl ether acetate where the alkyl group contains 1 to 4 carbon atoms. Carbitol esters are preferred because they react less into the polymer, and acetate esters are preferred because they are commercially available. Specifically, the preferred carbitols are diethylene glycol monoethyl ether, and diethylene glycol monoethyl ether acetate because they are high-boiling solvents and are ecologically acceptable. Other carbitols which can be used include diethylene glycol monobutyl ether, diethylene glycol monopropyl ether acetate.

Polyol

Diols which can be used in this invention include cyclohexanedimethanol, triethylene glycol, ethylene glycol, 1,4-butane diol, neopentyl glycol, propylene glycol, 1,5-pentanediol. The preferred diols are triethylene glycol, ethylene glycol, 1,4-butane diol, and neopentyl glycol because they have been found to work well and are inexpensive.

Triols which can be used in this invention include tris (2-hydroxyethyl) isocyanurate (THEIC), glycerol, trimethylol ethane, and trimethylol propane. The preferred triol is THEIC because it produces wire enamels having better thermal properties.

Fatty acid

The fatty acid is a $C_{12}$ to $C_{18}$ monocarboxylic unsaturated acid. Fatty acids which can be used in this invention include soya, linseed, tung, etc. The preferred fatty acid is soya because it produces wire enamels having good thermal stability and it is relatively inexpensive.

Diamine

Suitable diamines include meta phenylene diamine, methylene dianiline, 2,6-diamino toluene, 2,4-

# 0 009 653

diamino toluene. The preferred diamine is meta phenylene diamine because it produces enamels having greater thermal stability.

In the preferred method of making the polyester-amide-imide wire enamel blend of this invention, four components are first separately prepared. These components are a cross-linkable polyester, a linear polyester, a polyester-amide-imide, and a cresol formaldehyde resin.

Preparation of cross-linkable polyester

The cross-linkable polyester is prepared by first mixing together a polyol, a polyfunctional carboxylic compound, a diethylene glycol monoalkyl ether acetate where the alkyl group contains 1 to 4 carbon atoms, and a catalyst. A fatty acid is preferably also included in the composition.

The polyol is a mixture of a triol and diol in which the molar ratio of triol to diol is 1:0 to 1:1. The preferred molar ratio of triol to diol is 5:1 to 15:1. The amount of polyol used in the composition should be the stoichiometric equivalent required to react with the carboxylic acid plus 30 to 60 equivalent percent in excess.

The carboxylic compound must be at least 80% selected from terephthalic acid, isophthalic acid, or alkyl esters of terephthalic acid or isophthalic acid up to $C_3$. The rest of the carboxylic compound used in the composition may be trimellitic acid, trimellitic anhydride, maleic anhydride, adipic acid, or another aliphatic carboxylic acid. Mixtures of various acids or their esters are also contemplated. The preferred acid is terephthalic acid because it is inexpensive. It is preferable to use the dimethyl esters of the acids as they react more easily.

The amount of carbitol acetate in the composition should be 5 to 20% by weight, based on the total composition of cross-linkable polyester.

The catalyst is a condensation catalyst if the carboxylic compound has acid or anhydride groups and is an ester-interchange catalyst if the carboxylic compound is an ester. The ester-interchange catalyst is preferably an organic titanate ester such as tetraisopropyl titanate or butyl titanate. Tetraisopropyl titanate is preferred. The condensation catalyst is preferably dibutyl tin oxide. Butyl stannoic acid can also be used, but dibutyl tin oxide is preferred. The amount of catalyst used should be 0.5 to 2 g. per mole of dicarboxylic acid.

The fatty acid, which is preferably present in the cross-linkable polyester, should be used in an amount equal to 5 to 10 mole percent of the amount of carboxylic compound.

Once the composition is prepared, it is heated to form the cross-linkable polyester. A suitable and preferred reaction schedule is to heat rapidly to 180°C, then to increase the temperature at a rate of 10°C per hour up to 205°C, then to increase the temperature at a rate of 15°C per hour up to 250°C. Diethylene glycol monoethyl ether is then added to bring the solids content down to 55 to 75% solids.

Preparation of linear polyester

The linear polyester is prepared from a diol, a dicarboxylic acid, and a catalyst. A fatty acid is also preferably present.

The amount of diol used should be the stoichiometric equivalent needed to react with the carboxylic compound, plus 30 to 60 equivalent percent in excess. A mixture of diols is preferred to prevent crystallization.

The catalysts were described in the discussion of the cross-linkable polyester.

The fatty acid which is preferably present should be used in an amount equal to 3 to 10 mole percent of the carboxylic compound.

The composition is then heated to form the linear polyester. A preferred reaction schedule is to heat rapidly to 160°C and then increase the temperature at a rate of 15°C per hour up to 260°C, and to hold it at that temperature for eight hours. The composition is then cut with diethylene glycol monoethyl ether to 55 to 75% solids.

Preparation of polyester-amide-imide

In making the polyester-amide-imide, it is preferable to first prepare a polyester. This polyester is made by reacting a polyol, a carboxylic compound, and a catalyst. A fatty acid is preferably also present.

The polyol is a mixture of a diol and a triol in a molar ratio of 1:3 to 1:10. The preferred molar ratio is 1:4 to 1:5. The amount of polyol used should be equal to the stoichiometric equivalent needed to react with the dicarboxylic acid, plus 80 to 100 equivalent percent in excess.

The carboxylic compound was described in the discussion of the cross-linkable polyester.

A fatty acid is also preferably present. The amount of fatty acid should be 5 to 10 mole percent based on the carboxylic compound. The polyester is prepared by heating this composition, preferably by heating rapidly to 180°C then at a rate of 15°C per hour to 220°C to an acid number of less than 5.

After the polyester is prepared, and while it is still hot, a diamine and trimellitic anhydride are added. The molar ratio of diamine to trimellitic anhydride should be 1:1 to 0.8:1. Sufficient diamine and trimellitic anhydride should be used so that the amide plus the imide groups in the polyester-amide-imide component are from 1 to 2.5 times the number of ester groups. After the diamine and trimellitic anhydride have been added, the composition is heated to produce a clear fluid resin. This may advantageously be accomplished at 190°C to 210°C.

3

At this point, it is preferable to add additional trimellitic anhydride to increase the total carboxyls in the reaction by 3 to 7 mole percent of the total carboxylic compound. It is also preferable to add THEIC in an amount equal to 5 to 10 equivalent percent based on the total polyol. If additional trimellitic anhydride and THEIC are added, the reaction is continued until these ingredients are reacted in. This may be accomplished at 200°C to 210°C for about one-half hour for each ingredient. The composition is then cut with diethylene glycol monoethyl ether to 55 to 75% solids.

Preparation of cresol formaldehyde resin

The cresol formaldehyde resin is prepared by reacting a phenol with formaldehyde in the presence of an amine catalyst. Suitable phenols which can be used include meta para cresol, phenol, t-butyl phenol. The preferred phenol is meta para cresol. Formaldehyde is used as a mixture with water of 40% formaldehyde and 60% water. The molar ratio of phenol to actual formaldehyde present should be 1.2:1 to 1.6:1.

Amine catalyst which can be used include various amines, such as triethanolamine, dimethylethanol amine, or benzyldimethylamine. The preferred amine catalyst is triethanolamine. The amount of catalyst should be 5 to 12% by weight based on the total weight of the composition.

The composition is then heated to form the cresol formaldehyde resin. The reaction is preferably carried on by refluxing for about an hour and one-half at 100°C, decanting off the water, neutralizing the catalyst with salicylic acid, then heating to 40 to 80°C under 26 mm of mercury pressure to about 36 PA S viscosity. The composition is then cut with diethylene glycol monoethyl ether to 40 to 60% solids.

Preparation of polyester-amide-imide blend

The polyester-amide-imide wire enamel blend is prepared by mixing together 30 to 50% (by weight based on total solids) of the polyester-amide-imide portion, 20 to 30% of the linear polyester portion, 10 to 20% of the cross-linkable polyester portion, and up to 15% of the cresol formaldehyde resin portion. The blend also preferably contains 2 to 5% hexamethoxymethyl melamine to improve cut-through, and 2 to 5% adhesion promoters such as organic titanates, for example, tetraisopropyl titanate or tetrabutyl titanate. The cresol formaldehyde resin portion is preferably present and a preferred amount is from 7 to 14% by weight based on total solids. The blend also preferably contains up to 2% copper ethyl aceto acetate, cobalt naphthanate, or manganese naphthanate (at 6% cobalt or manganese) to improve adhesion. The polyester-amide-imide wire enamel blend also preferably includes up to 20% by weight of an end-blocked isocyanate to improve adhesion as tested for in the Emerson scrape test. A cyclic trimer of toluene diisocyanate end-blocked with phenol or some other end-blocked isocyanate may be used, but the preferred end-blocked isocyanate is a THEIC-terephthalate ester urethane isocyanate blocked with meta para cresol (see Example VI) because it does not detract from flexibility as other isocyanates do.

The polyester-amide-imide wire enamel blend contains no water, no cresylic acid, and no other solvent except for the diethylene glycol monoethyl ether. Although water is present with the formaldehyde, it is boiled off before the blend is completed.

Mixtures of various components and ingredients are also contemplated. The blend is preferably prepared by mixing at 80 to 90°C. It is then filtered to remove any solid matter. The polyester-amide-imide wire enamel blend can also be prepared by preparing the cross-linkable polyester, the linear polyester and the polyester-amide-imide component together in sequence in the same reaction vessel. (See Examples 1 and 8). Another alternative is to include all the fatty acids in one of the polyester components instead of dividing it beween the three different polyesters.

The blend can then be coated onto wire and cured. A suitable cure procedure is to run the wire at a rate of 22 to 28 feet per minute through a 12-ft. high tower at 450°C.

The invention will now be illustrated with reference to the following Examples:

Example 1

The following reactants are charged into a 3-liter, 4-neck reaction flask equipped with a heater, motor stirrer, nitrogen sparge tube, thermometer, and steam condenser:

| | | |
|---|---|---|
| 380.0 g | ethylene glycol | (6.12 M) |
| 61.2 g | triethylene glycol | (0.402 M) |
| 116.4 g | soya fatty acid | (0.414 M) |
| 232.0 g | trimellitic anhydride | (1.206 M) |

The mixture is stirred and heated at 10°C per hour from 180°C to 200°C to a clear solution to make a polyester having excess hydroxyl groups. Then the following ingredients are added:

| | | |
|---|---|---|
| 392.0 g | methylene dianiline | (1.972 M) |
| 448.0 g | trimellitic anhydride | (2.330 M) |

4

The reaction is continued at 185 to 195°C. A hard semi-solid turbid polyester-amide-imide forms which, upon continued heating becomes clear and fairly fluid with a ball and ring softening temperature of 60°C. At this point, the following ingredients are added to the reaction flask:

| | |
|---|---|
| 207.0 g | terephthalic acid (1.248 M) |
| 5.6 g | dibutyl tin oxide |
| 13.2 g | distilled water, ethylene glycol and triethylene glycol being present in sufficient excess to react with the terephthalic acid, being the polyfunctional carboxylic compound. |

The reaction is continued at a 15°C/hour temperature increase to 190—225°C to esterify more of the excess hydroxyl groups. After 4 hours reaction the resinous solution is clear and a ball and ring softening temperature of 106°C is obtained. The reaction is cooled to 190°C and 261.0 g tris (2-hydroxyethyl) isocyanurate (1.0 M) is added and the reaction is continued for 1/2 hour at 190 to 200°C to a ball and ring softening temperature of 82°C. The resinous product is cooled and dissolved into 542 g diethylene glycol monoethyl ether and 271 g tetraethylene glycol diacrylate. (The TEGDA is a reactive diluent which was added for smoothness). The yield of polyester-amide-imide is 2710 g solution at 70% non-volatiles.

The solution is coated on #18 AWG copper wire in a 15-ft. vertical wire tower at 400°C maximum temperature, using four passes with standard doghouse dies with 43 to 45 mil diameter openings and a solution temperature of 50°C. The wire is smooth at coating speeds of 16 to 22 ft. per minute and 3.5 mils build and has good properties. The wire passes quick snap test, 30% elongation+1X mandrel, 1X mandrel heat shock at 175°C, 11 to 12 kV electric strength, 230 to 290°C cut through with 2 kg wt. on crossed wires, and 12-lb. Emerson scrape. The thermal life test (1000 V on twisted pairs) shows 84 hours at 250°C, 1308 hours at 225°C and 11,300 hours at 200°C indicating a 20,000 hours-life at 195°C.

Example 2
Part I
The following reactants are heated in a 1L reaction flask equipped as in Example 1 to prepare a polyester:

| | |
|---|---|
| 212.0 g | ethylene glycol |
| 135.2 g | triethylene glycol |
| 101.0 g | tris (2-hydroxyethyl) isocyanurate |
| 56.0 g | soya fatty acid |
| 4.7 g | dibutyl tin oxide |
| 263.0 g | terephthalic acid |

The reaction mixture is heated with stirring and nitrogen sparging to 180°C to 220°C at 15°C/hour until a 3.8 acid number is obtained. At this point, additional ingredients are charged to prepare a polyester-amide-imide component:

| | |
|---|---|
| 335.6 g | meta phenylene diamine |
| 596.0 g | trimellitic anhydride |

The reaction is continued at 190 to 210°C resulting in a turbid semi-solid material progressing to a clear fluid resin with a 100°C ball and ring softening temperature. At this point, 48.0 g trimellitic anhydride is added and the reaction continued for 1/2 hour at 190 to 200°C. The reaction is cooled to 190°C and 130.4 g of tris (2-hydroxyethyl) isocyanurate is added. The reaction is continued at 205 to 210°C to a ball and ring softening temperature of ~115°C. It is then cooled and diluted with 728.0 g of diethylene glycol monoethyl ether. The yield is 2356.0 g of solution at 70% non-volatiles.

Part II
The following ingredients are charged into a 2L reaction flask to prepare a cross-linked polyester:

| | |
|---|---|
| 522.2 g | tris (2-hydroxyethyl) isocyanurate |
| 30.0 g | triethylene glycol |
| 388.2 g | dimethyl terephthalate |
| 40.3 g | soya fatty acids |
| 3.0 g | tetra isopropyl titanate in 100 g diethylene glycol monoethyl ether acetate |

With nitrogen sparging and a steam condenser, the mixture is heated at 180 to 205°C at 10°C per hour, then with a short air condenser to 250°C. The reaction is held at 250°C for 2 hours and cooled to 200°C where 300 g of diethylene glycol monoethyl ether is added. The yield is 1233 g of solution at 68% non-volatiles.

5

Part III

The following ingredients are added to a 5-liter reaction flask to prepare a linear polyester:

| | |
|---|---|
| 1941.0 g | dimethyl terephthalate |
| 310.5 g | ethylene glycol |
| 300.5 g | 1,4-butanediol |
| 348.0 g | neopentyl glycol |
| 500.5 g | triethylene glycol |
| 121.0 g | soya fatty acids |
| 15.0 g | tetraisopropyl titanate in 125 g xylene |

With nitrogen sparging and a steam condenser, the ingredients are heated 160°C to 260°C at 15°C per hour and the reaction continued for 8 hours at 260°C. The resinous mixture is cooled and 1090 g of diethylene glycol monoethyl ether is added. The yield is 3706 g of a turbid solution at 69% non-volatiles.

Part IV

A 3-liter reaction flask is charged with the following ingredients to prepare a phenol formaldehyde resin:

| | |
|---|---|
| 1376.0 g | meta para cresol |
| 605.0 g | formaldehyde (40%) |
| 23.4 g | triethanolamine |

The mixture is stirred and heated with a water-cooled reflux condenser attached with condensate returned to the flask for 1-1/2 hours at reflux. The reaction is cooled to 55°C, allowed to settle in a separatory funnel and removed from the water layer. It is recharged to the reaction flask and 21.7 g of salicylic acid is added and the product is heated 40 to 80°C at 26 mm Hg pressure until a viscosity of 3,6 PA S is obtained. At this point, 1695 g cresylic acid is added and a solution is obtained containing 29% non-volatiles. (The use of cresylic acid is not part of this invention, but illustrates the prior procedure. See Example 4, Part II where a diethylene glycol monoethyl ether is substituted for the cresylic acid).

The following blend is prepared from the previously prepared solutions:

| | |
|---|---|
| 164.9 g | of Part I |
| 110.0 g | of Part III |
| 55.0 g | of Part II |
| 36.8 g | of Part IV |
| 13.6 g | of hexamethoxymethyl melamine (Cymel 301—American Cyanamide) |
| 13.6 g | of tetraisopropyl titanate dissolved in 13.6 g cresylic acid |
| 1.35 g | of copper ethyl aceto acetate |
| 10.4 g | of cobalt naphthanate at 6% cobalt |

The blend is stirred and heated for 1 hour at 80 to 90°C. The blend has a viscosity of 13 PA S at 40°C and a non-volatile content of 60%. When die-coated on #18 AWG copper wire with six passes at 22 ft/min to 28 ft/min, it gives a very smooth coating with good flexibility (20 to 30% elongation plus 1X mandrel) which passes 1X heat shock at 17°C to 200°C, 302°C cut-through, 11 to 12 kV electric strength, and 20-lb. Emerson scrape. Preliminary thermal life test on twisted pairs (12 hours at 275°C; 228 hours at 250°C; and >1700 hours at 225°C) indicate a thermal life of 20,000 hours above 190°C.

Example 3

This example shows a much-improved Emerson scrape and cut-through temperature with slightly lower flexibility and coating smoothness.

Part I

The following ingredients are charged into a 3-liter reaction flask to prepare a cross-linked polyester:

| | |
|---|---|
| 57.0 g | triethylene glycol |
| 210.0 g | ethylene glycol |
| 755.0 g | dimethyl terephthalate |
| 203.0 g | tris (2-hydroxethyl) isocyanurate |
| 3.0 g | tetraisopropyl titanate in 15.0 g cresylic acid |
| 37.5 g | xylene |

6

With nitrogen sparging and a steam-cooled reflux condenser, the ingredients are heated 160°C—260°C at 15°C/h then cooled to 200°C and the following added:

| | |
|---|---|
| 462.0 g | dimethyl terephthalate |
| 618.0 g | tris (2-hydroxyethyl) isocyanurate |
| 3.0 g | tetraisopropyl titanate in 15.0 g cresylic acid |

The reaction is continued at 190—225°C at 15°C/hours and then diluted with 600 g diethylene glycol monoethyl ether acetate and 600 g diethylene glycol monoethyl ether. A yield of 3070 g of solution at 60% non-volatiles is obtained. The following blend is prepared:

| | |
|---|---|
| 620.0 g | of Part I of Example 2 |
| 443.0 g | of Part I of Example 3 |
| 102.3 g | of Part IV of Example 2 |
| 18.8 g | of tetraisopropyl titanate dissolved in 37.6 g of cresylic acid |
| 160.0 g | of tetraethylene glycol diacrylate |

The blend is stirred and heated at 80 to 90°C for 1 hour.

The solution is coated on #18 AWG copper wire in a 15-ft. vertical tower with the following results:

Baking range 22 to 28 ft/min, flexibility 10 to 25% elongation plus 1X mandrel, fairly smooth with slight waviness, heat shock 1X at 175°C, cut-through 380°C, Emerson scrape 26 to 30 lb. Thermal life data indicate a 20,000 hours life above 180°C.

Example 4

This blend contains only ecologically acceptable solvent and is completely free of the non-desirable cresylic acid solvent. The solution blend coated on #18 AWG copper wire yields a film with very good smoothness, flexibility, and heat shock, but lower Emerson scrape and thermal life than that of Example 3.

Part I

The polyester-amide-imide composition is as follows (5-liter flask):

| | | |
|---|---|---|
| 227.1 | g | ethylene glycol |
| 183.3 | g | triethylene glycol |
| 110.1 | g | 1,4-butanediol |
| 127.5 | g | neopentyl glycol |
| 84.0 | g | soya fatty acid |
| 31.8 | g | distilled water |
| 7.05 | g | dibutyl tin oxide |
| 394.5 | g | terephthalic acid |

With nitrogen sparging and steam-cooled reflux condenser, the ingredients are heated 180 to 220°C at 15°C/hour to an acid number of 3.0. At this point, the following ingredients are added:

| | |
|---|---|
| 377.4 g | meta phenylene diamine |
| 230.1 g | 4,4'-methylene dianiline |
| 894.0 g | trimellitic anhydride |

The reaction is continued at 190 to 210°C to a 92°C ball and ring softening temperature. The reaction is cooled to 175°C and 72.0 g of trimellitic anhydride is added and the reaction is continued at 190 to 200°C for 1/2 hour where 195.6 g of tris (2-hydroxyethyl) isocyanurate is added. The reaction is continued at 205 to 210°C until the ball and ring softening temperature of 115°C is obtained. The resin is dissolved in 1116.0 g of diethylene glycol monoethyl ether A yield of 3602 g of solution at 70% non-volatiles is obtained.

Part II

This resin preparation is the same as that of Part IV of Example 2 except that the 1695 g of cresylic acid solvent at the end of the reaction is replaced by 524 g of diethylene glycol monoethyl ether acetate. A yield of 1935 g of solution at 48.6% solids is obtained.

The following ingredients are blended:

| | |
|---|---|
| 186.5 g | Part I, Example 4 |
| 57.2 g | Part II, Example 2 |
| 129.2 g | Part III, Example 2 |

7

56.0 g   tetraethylene glycol diacrylate
40.5 g   Part II, Example 4
11.2 g   tetraisopropyl titanate dissolved in 11.2 g diethylene glycol monoethyl ether

The solution blend is stirred and heated at 80 to 90°C for 1 hour. The blend is diecoated on #18 AWG copper wire at six passes and is very smooth at 3.0 to 3.5 mils build at 22 ft/min. All samples are very flexible, passing 30% elongation plus 1X mandrel, and also pass 250°C 1X heat shock. The cut-through temperature at 22 ft/min is 310°C and the Emerson scrape is 12 to 14 lb. The thermal life data (12 hours at 275°C, 156 hours at 250°C, 528 hours at 225°C and 1350 hours at 200°C) extrapolates to ~165°C for a 20,000 hour life.

Example 5

The reactions and blend are exactly the same as those of Example 2 except that in Part I of Example 2 the 335.6 g of meta phenylenediamine is replaced by 304.0 g of 2,4-diamino toluene and 76.0 g of 2,6-diamino toluene. The resulting blend is coated on #18 AWG copper wire at 22 to 28 ft/min and is smooth with good flexibility (20 to 30% elongation+1X mandrel), 175 to 225°C 1X heat shock, 310°C cut-through, and 14 to 16 lb. Emerson scrape.

Example 6

This blend is the same as that of Example 3 except that it includes an end-blocked ester-urethane-isocyanate prepared in the following manner with the following ingredients added to a 3-liter flask:

522.0 g   tris (2-hydroxyethyl) isocyanurate
166.0 g   terephthalic acid
11.0 g   distilled water
2.5 g   dibutyl tin oxide

With nitrogen sparging and a downward water condenser to condense out the water of reaction, the mixture is heated at 210°C to 260°C at 15°C/hour until 44.5 g water is condensed out whence 552 g diethylene glycol monoethyl ether acetate is added and the solution is cooled. In a separate container, 690 g of a mixture containing 80%, 2,4-toluene diisocyanate and 20% 2,6-toluene diisocyanate is added slowly to 531 g diethylene glycol monoethyl ether and reacted 1/2 hour at 100°C whence 360 g of diethylene glycol monoethyl ether acetate is added. This product is cooled and added to the 3-liter reaction flask and reacted 1 hour at 100 to 105°C. The yield is 2775 g of solution at 50% non-volatiles.

A blend is prepared the same as that of Example 3 except that 168 g of the above-prepared solution is added. When coated on #18 AWG copper wire, the same properties as those of Example 3 are obtained except that the wire is smoother and slightly higher Emerson scrape (32 lb) is obtained.

Example 7

In this example, the ester-amide-imide portion does not contain a fatty acid. Fairly smooth coatings with good properties are obtained. The ester-amide-imide composition is as follows:

106.0 g   ethylene glycol
67.6 g   triethylene glycol
10.6 g   distilled water
2.35 g   dibutyl tin oxide
131.5 g   terephthalic acid

The ester portion is reacted 180°C to 220°C to a clear solution and the amide-imide portion is charged:

57.0 g   carbitol acetate (solvent)
167.8 g   meta phenylenediamine
298.0 g   trimellitic anhydride

The reaction is continued at 190 to 210°C through the semi-solid to a clear state where 43.2 g trimellitic anhydride is added and the reaction continued 1/2 hour at 190 to 200°C. Then 115.7 g tris (2-hydroxyethyl) isocyanurate, is added and the reaction is continued an additional 3 hours at 205 to 210°C, whence 285 g diethylene glycol monoethyl ether is added and the solution is cooled. A yield of 1148 g of solution at 70% non-volatile is obtained.

The following blend is prepared completely free of the non-desirable cresylic acid solvent:

8

**0 009 653**

186.5 g  polyester-amide-imide of this example
75.2 g  Part II of Example 2
111.2 g  Part III of Example 2
56.0 g  tetraethylene glycol diacrylate
40.7 g  Part II of Example 4
11.2 g  tetraisopropyl titanate in 11.2 g diethylene glycol monoethyl ether

This blend coats fairly smoothly on #18 AWG copper wire at 22 ft/min to 32 ft/min coating speed. The flexibility is 25% to 30% elongation plus 1X mandrel, the 1X heat shock passes at 200°C to 225°C, the cut-through temperature is 332°C at 22 ft/min bake, and the Emerson scrape is 13 to 16 lb.

Example 8
This example has fair heat shock and good cut-through with fair flexibility and coating smoothness. This resin contains about 1% by weight of cresylic acid.
The following ingredients are charged into a reaction flask to prepare a polyester-amide-imide:

187.2 g  trimellitic anhydride
87.2 g  meta phenylene diamine
33.6 g  triethylene glycol
112.3 g  ethylene glycol
59.1 g  tris (2-hydroxyethyl) isocyanurate
1.2 g  tetraisopropyl titanate
2.0 g  diethylene glycol monoethyl ether

With nitrogen sparge and air-cooled condenser, the ingredients are heated forming a turbid semi-solid state which breaks up at about 185°C. The reaction is continued at 190°C until clarity is achieved and then cooled to 170°C. At this point, 83.6 g meta phenylene diamine and 172.8 g trimellitic anhydride are added. Again, while being heated a semi-solid state forms. The reaction is continued to 198°C where a clear solution is obtained. The reaction is then cooled to 170°C where another 108 g trimellitic anhydride addition is made. The reaction is taken 170°C to 190°C at the rate of 10° per hour. At this point 44.6 g maleic anhydride is added and reacted to clarity in ~15 min. at which point 84 g of tris (2-hydroxyethyl) isocyanurate is added. The reaction is continued for 1/2 hour at 185° to 190°C.
The reaction is stopped at this point by adding 200 g of diethylene glycol monoethyl ether acetate and 300 g of diethylene glycol monoethyl ether. The yield is 1308 g at 62% non-volatile material.
A blend is then prepared of the following previously prepared solution:

170.0 g  of polyester-amide-imide of this example
112.8 g  of Part I, Example 3
30.3 g  of Part IV, Example 2

The blend is then coated on #18 AWG copper wire in a 15-ft. vertical tower at speeds of 22 to 28 ft/min utilizing only four passes. The build is 2.4 to 2.7 mil with good flexibility of 20%+1X mandrel, a 1X heat shock of 200°C and cut-through of 377°C. The film is fairly smooth and has an Emerson scrape of 10 to 12 lb. In view of Example 3, Part I, the blend includes the linear polyester component.

**Claims**

1. A polyester-amide-imide wire enamel blend characterized in that said blend comprises:
(A) a solution in a carbitol (a diethylene glycol monoalkyl ether or a diethylene glycol monoalkyl ether acetate where the alkyl group contains 1 to 4 carbon atoms) of a cross-linkable polyester comprising the reaction product of:
(1) a polyol which is a mixture of a diol and a triol;
(2) a polyfunctional carboxylic compound at least 80% by weight selected from terephthalic acid, isophthalic acid, alkyl esters of terephthalic acid or isophthalic acid up to $C_3$, and mixtures thereof;
(3) a catalyst;
(B) a solution in a carbitol of a linear polyester comprising the reaction product of:
(1) a diol;
(2) a carboxylic compound at least 80% by weight selected from terephthalic acid, isophthalic acid, alkyl esters up to $C_3$ of terephthalic acid or isophthalic acid, and mixtures thereof;
(3) a catalyst; and
(C) a solution in a carbitol of a polyester-amide-imide component comprising the reaction product of:
(1) a polyester which comprises the reaction product of

(a) a polyol which is a mixture of a diol and a triol;

(b) a polyfunctional carboxylic compound at least 80% by weight selected from terephthalic acid, isophthalic acid, alkyl esters up to $C_3$ of terephthalic acid or isophthalic acid, and mixtures thereof;

(c) a catalyst;

(2) a diamine; and,

(3) trimellitic anhydride; and, said polyester-amide-imide wire enamel blend also containing a $C_{12}$—$C_{18}$ monocarboxylic unsaturated acid component which is reacted into any of its polyester components.

2. A wire enamel blend according to claim 1, characterized in that the molar ratio of triol to diol in the cross-linkable polyester is from 1:0 to 1:1 and the molar ratio of triol to diol in the polyester-amide-imide is from 1:3 to 1:10.

3. A wire enamel blend according to claim 1 or 2 characterized in that the cross-linkable polyester includes from 5 to 10 mole percent based on the carboxylic acid of a $C_{12}$ to $C_{18}$ monocarboxylic unsaturated acid, linear polyester includes from 3 to 10 mole percent based on the carboxylic acid of a $C_{14}$ to $C_{18}$ monocarboxylic unsaturated acid, and the polyester portion of the polyester-amide-imide includes from 5 to 10 mole percent based on the carboxylic acid of a monocarboxylic unsaturated acid.

4. A wire enamel blend according to claim 1, 2 or 3, characterized in that the carboxylic acid alkyl ester in the cross-linkable polyester, in the linear polyester, and in the polyester-amide-imide, is a dimethyl ester of terephthalic acid.

5. A wire enamel blend according to any of claims 1 to 4, characterized in that the blend includes a solution in a carbitol of a cresol formaldehyde resin comprising the reaction product of a phenol, formaldehyde, and an amine catalyst.

6. A wire enamel blend according to claim 5, characterized in that the amount of said cresol formaldehyde resin is 7 to 14% by weight based on total solids.

7. A wire enamel blend according to any of claims 1 to 6, characterized in that the amount of polyester-amide-imide by weight based on total solids is from 30 to 50%, the amount of linear polyester by weight based on total solids is from 20 to 30%, and the amount of cross-linkable polyester by weight based on total solids is from 10 to 20%.

8. A wire enamel blend according to any of claims 1 to 7, characterized in that the blend includes from 2—5% by weight based on total solids of an adhesion promoter and up to 2% by weight based on total solids of copper ethyl aceto acetate, cobalt naphthanate or manganese naphthanate at 6% cobalt or manganese.

9. A wire enamel blend according to claim 8, characterized in that the adhesion promoter is tetraisopropyl titanate.

10. A wire enamel blend according to any of claims 1 to 9, characterized in that the cross-linkable polyester, the linear polyester, and the polyester-amide-imide are prepared in sequence in the same reaction vessel.

11. A wire enamel blend according to any of claims 1 to 10, characterized in that the diol in the linear polyester is a mixture of diols.

12. A wire enamel blend according to any of claims 1 to 11, characterized in that the carbitol at least one of diethylene glycol monoethyl ether and diethylene glycol monoethyl ether acetate.

13. A wire enamel blend according to any of claims 1 to 12, characterized in that the diol used in components of the blend is at least one of triethylene glycol, ethylene glycol, 1,4-butane diol and neopentyl glycol, and the triol used in the components of the blend is tris (2-hydroxyethyl)-isocyanurate.

14. A wire enamel blend according to any of claims 1 to 13, characterized in that the fatty acid is soya.

15. A wire enamel blend according to any of claims 1 to 14, characterized in that the diamine used in making said polyester-amide-imide component is meta phenylene diamine.

16. A method of making a polyester-amide-imide wire enamel composition characterized by heating and mixing the blend of any of the preceding claims at from 80 to 90°C.

**Revendications**

1. Mélange pour l'émaillage de fils métalliques à base de polyester-amide-imide, caractérisé en ce que ce mélange comprend:

(A) une solution dans un carbitol (monoalcoyl éther de diéthylèneglycol ou monoalcoyléther-acétate de diéthylèneglycol où le groupe alcoyl contient 1 à 4 atomes de carbone) d'un polyester réticulable comprenant le produit de la réaction de:

(1) un polyol qui est un mélange d'un diol et d'un triol,

(2) un composé carboxylique polyfonctionnel, choisi, pour au moins 80% en poids parmi les acides téréphtalique et isophtalique, les alcoylesters des acides téréphtalique et isophtalique jusqu'à $C_3$, et leurs mélanges,

(3) un catalyseur;

0 009 653

(B) une solution dans un carbitol d'un polyester linéaire comprenant le produit de la réaction de:

(1) un diol,

(2) un composé carboxylique choisi, pour au moins 80% en poids, parmi les acides téréphtalique et isophtalique, les alcoylesters jusqu'à $C_3$ des acides téréphtalique et isophtalique, et leurs mélanges,

(3) un catalyseur; et

(C) une solution dans un carbitol d'un composant polyester-amide-imide comprenant le produit de la réaction de

(1) un polyester qui comprend le produit de la réaction de

    (a) un polyol qui est un mélange d'un diol et d'un triol,

    (b) un composé carboxylique polyfonctionnel choisi, pour au moins 80%, en poids, parmi les acides téréphtalique et isophthalique, les alcoylesters jusque $C_3$ des acides téréphtalique et isophtalique et leurs mélanges,

    (c) un catalyseur,

(2) une diamine, et

(3) de l'anhydride trimellitique; et ce mélange pour l'émaillage de fil à base de polyester-amide-imide contenant aussi un composant acide monocarboxylique insaturé en $C_{12}$ à $C_{18}$ qui réagit avec un quelconque des composants polyester.

2. Mélange pour l'émaillage de fil suivant la revendication 1, caractérisé en ce que le rapport molaire du triol au diol dans le polyester réticulable se situe entre 1:0 et 1:1, et le rapport molaire du triol au diol dans le polyester-amide-imide va de 1:3 à 1:10.

3. Mélange pour l'émaillage de fils suivant l'une des revendications 1 et 2, caractérisé en ce que le polyester réticulable comprend de 5 à 10 moles pour cent, basé que l'acide carboxylique, d'un acide monocarboxylique insaturé en $C_{12}$ à $C_{18}$, le polyester linéaire comprend de 3 à 10 moles pour cent, basé sur l'acide carboxylique, d'un acide monocarboxylique insaturé en $C_{14}$ à $C_{18}$, et la portion polyester du polyester-amide-imide comprend de 5 à 10 moles pour cent, basé sur l'acide carboxylique, d'un acide monocarboxylique insaturé.

4. Mélange pour l'émaillage de fil suivant l'une quelconque des revendication 1, 2 et 3, caractérisé en ce que l'alcoylester de l'acide carboxylique dans le polyester réticulable, dans le polyester linéaire et dans le polyester-amide-imide, est un diméthylester de l'acide téréphtalique.

5. Mélange pour l'émaillage de fil suivant l'une quelconque des revendications 1 à 4, caractérisé en ce que le mélange comprend une solution dans un carbitol d'une résine crésol-formol, comprenant le produit de la réaction d'un phénol, de formol et d'une amine comme catalyseur.

6. Mélange pour l'émaillage de fil suivant la revendication 5, caractérisé en ce que la proportion de cette résine crésol-formol est de 7 à 14% en poids, basé sur les solides totaux.

7. Mélange pour l'émaillage de fil suivant l'une quelconque des revendications 1 à 6, caractérisé en ce que la proportion en poids de polyester-amide-imide, basée sur le total des solides, est de 30 à 50%, la proportion en poids de polyester linéaire, basée sur le total des solides, est de 20 à 30%, et la proportion en poids de polyester réticulable, basée sur le total des solides, est de 10 à 20%.

8. Mélange pour l'émaillage de fil suivant l'une quelconque des revendications 1 à 7, caractérisé en ce que le mélange comprend de 2 à 5% en poids basé sur le total des solides, d'un promoteur d'adhérence, et jusqu'à 2% en poids basé sur le total des solides d'un éthylacétoacétate de cuivre, de naphtanate de cobalt ou de naphtanate de manganèse à 6% de cobalt ou de manganèse.

9. Mélange pour l'émaillage de fil suivant la revendication 8, caractérisé en ce que le promoteur d'adhérence est le titanate de tétraisopropyle.

10. Mélange pour l'émaillage de fil suivant l'une quelconque des revendications 1 à 9, caractérisé en ce que le polyester réticulable, le polyester linéaire et le polyester-amide-imide sont préparés successivement dans la même cuve de réaction.

11. Mélange pour l'émaillage de fil, suivant l'une quelconque des revendications 1 à 10, caractérisé en ce que le diol, dans le polyester linéaire, est un mélange de diols.

12. Mélange pour l'émaillage de fil suivant l'une quelconque des revendications 1 à 11, caractérisé en ce que le carbitol est constitué par au moins un des monoéthyléther de diéthylèneglycol et monoéthyléthéracétate de diéthylèneglycol.

13. Mélange pour l'émaillage de fil suivant l'une quelconque des revendications 1 à 12, caractérisé en ce que le diol utilisé dans les composants du mélange est au moins un des suivants: triéthyléneglycol éthylèneglycol, 1,4-butane diol, et néopentylglycol, et le triol utilisé dans les composants du mélange est le tris (2-hydroxyéthyl) isocyanurate.

14. Mélange pour l'émaillage de fil suivant l'une quelconque des revendications 1 à 13, caractérisé en ce que l'acide gras est celui du soja.

15. Mélange pour l'émaillage de fil suivant l'une quelconque des revendications 1 à 14, caractérisé en ce que la diamine utilisée dans la fabrication du composant polyester-amide-imide est la méta-phénylènediamine.

16. Procédé pour la fabrication d'une composition pour l'émaillage de fil à base de polyester-amide-imide suivant l'une quelconque des revendications 1 à 15, caractérisé en ce que l'on chauffe et mélange cette composition entre 80 et 90°C.

11

# 0 009 653

**Patentansprüche**

1. Polyester-Amid-Imid-Drahtbrennlack-Mischung, dadurch gekennzeichnet, daß die Mischung folgendes umfaßt:

(A) eine in einem Carbitol (ein Diäthylenglycolmonoalkyläther oder ein Diäthylenglycolmonoalkylätherazetat, bei dem die Alkyl-Gruppe 1—4 Kohlenstoff-Atome enthält) gelöste Lösung eines quer vernetzbaren Polyesters, umfassend das Reaktionsprodukt von:

(1) einem Polyol, das eine Mischung eines Diols und eines Triols ist;

(2) einer polyfunktionalen Carboxyl-Verbindung mit zumindest 80 Gew% ausgewählt aus Terephthalatsäure, isophthalischer Säure, Alkylester der Terephthalatsäure oder isophthalischen Säure bis zu $C_3$ sowie Mischungen davon;

(3) einem Katalysator;

(B) eine in einem Carbitol gelöste Lösung eines linearen Polyesters, umfassend das Reaktionsprodukt von:

(1) einem Diol;

(2) einer Karbonverbindung mit zumindest 80 Gew% ausgewählt aus therephthalischer Säure, isophthalischer Säure, Alkylestern bis zu $C_3$ von terephthalischer Säure oder isophthalischer Säure und Mischungen davon;

(3) einem Katalysator; und

(C) eine in einem Carbitol gelöste Lösung eines Polyester-Amid-Imid-Bestandteils, umfassend das Reaktionsprodukt von:

(1) einem Polyester, der das Reaktionsprodukt umfaßt von

(a) einem Polyol, das eine Mischung aus einem Diol und einem Triol ist;

(b) einer polyfunktionellen Karbonverbindung von zumindest 80 Gew% ausgewählt aus terephthalischer Säure, isophthalischer Säure, Alkylestern bis zu $C_3$ der terephthalischen Säure oder isophthalischen Säure, und Mischungen davon;

(c) einem Katalysator;

(2) einem Diamin; und

(3) trimellitischem Anhydrid; und wobei die Polyester-Amid-Imid-Drahtbrennlack-Mischung auch einen $C_{12}$—$C_{18}$ ungesättigten Monokarbonsäure-Bestandteil enthält, der zu irgendeiner seiner Polyesterbestandteile reagiert wird.

2. Drahtbrennlack-Mischung nach Anspruch 1, dadurch gekennzeichnet daß das molare Verhältnis von Triol zu Diol in dem quer vernetzbaren Polyester zwischen 1:0 und 1:1 liegt und daß das molare Verhältnis von Triol zu Diol in dem Polyester-Amid-Imid zwischen 1:3 und 1:10 liegt.

3. Drahtbrennlack-Mischung nach Anspruch 1 oder 2, dadurch gekennzeichnet, daß der quer vernetzbare Polyester zwischen 5 und 10 Mol-Prozent umfaßt, basierend auf der Karbonsäure von einer $C_{12}$—$C_{18}$ ungesättigten Monokarbonsäure, daß das lineare Polyester 3—10 Mol-Prozent umfaßt, basierend auf der Karbonsäure einer $C_{14}$—$C_{18}$ ungesättigent Monokarbonsäure, und daß der Polyesterteil des Polyester-Amid-Imid 5—10 Mol-Prozent enthält, basierend auf der Karbonsäure einer ungesättigten Monokarbonsäure.

4. Drahtbrennlack-Mischung nach Anspruch 1, 2 oder 3, dadurch gekennzeichnet, daß der Karbonsäure-Alkylester in dem quer verbetzbaren Polyester, in dem linearen Polyester und in dem Polyester-Amid-Imid ein Dimethylester der therephthalischen Säure ist.

5. Drahtbrennlack-Mischung nach einem der Ansprüche 1—4, dadurch gekennzeichnet, daß die Mischung eine Lösung eines in einem Carbitol gelösten Cresolformaldehyd-Harzes enthält, das das Reaktionsprodukt eines Phenols, Formaldehyds und eines Amin-Katalysators umfaßt.

6. Drahtbrennlack-Mischung nach einem der Ansprüche 1—5, dadurch gekennzeichnet, daß die Menge des Cresol-Formaldehyd-Harzes 7—14 Gew% ausmacht, basierend auf der Gesamtfeststoffmenge.

7. Drahtbrennlack-Mischung nach einem der Ansprüche 1—6, dadurch gekennzeichnet, daß die gewichtsmäßige Menge des Polyester-Amid-Imid, basierend auf der Gesamtfeststoffmenge, zwischen 30 und 50% liegt, daß die Menge des linearen Polyesters zwischen 20 und 30 Gew% liegt, basierend auf der Gesamtfeststoffmenge, und daß die Menge des quer vernetzbaren Polyesters zwischen 10 und 20 Gew% beträgt, basierend auf der Gesamtfeststoffmenge.

8. Drahtbrennlack-Mischung nach einem der Ansprüche 1—7, dadurch gekennzeichnet, daß die Mischung 2—5 Gew%, basierend auf der Gesamtfeststoffmenge, eines Adhäsions-Promoters und bis zu 2 Gew%, basierend auf der Gesamtfeststoffmenge, eines Kupferäthyl-Azeto-Azetats, Kobalt-Naphthanats oder Mangan-Naphthanats bei 6% Kobalt oder Mangan enthält.

9. Drahtbrennlack-Mischung nach Anspruch 8, dadurch gekennzeichnet, daß der Adhäsions-Promotor Tetraisopropyltitanat ist.

10. Drahtbrennlack-Mischung nach einem der Ansprüche 1—9, dadurch gekennzeichnet, daß der quer vernetzbare Polyester, der lineare Polyester und das Polyester-Amid-Imid in Aufeinanderfolge im gleichen Reaktionsgefäß heregestellt werden.

11. Drahtbrennlack-Mischung nach einem der Ansprüche 1—10, dadurch gekennzeichnet, daß das Diol in dem linearen Polyester eine Mischung von Diolen ist.

12

**0 009 653**

12. Drahtbrennlack-Mischung nach einem der Ansprüche 1—11, dadurch gekennzeichnet, daß das Carbitol zumindest einesm der Stoffe Diäthylenglycolmonoäthyläther und Diäthylenglycolmonoäthylätherazetat ist.

13. Drahtbrennlack-Mischung nach einem der Ansprüche 1—12, dadurch gekennzeichnet, daß das in den Bestandteilen der Mischung benutzte Diol zumindest einen der Stoffe Triäthylenglycol, Äthylenglycol, 1,4-Butandiol und Neopentylglycol umfaßt, und daß das in den Bestandteilen der Mischung benutzte Triol Tris(2-hydroxyäthyl) isocyanurat ist.

14. Drahtbrennlack-Mischung nach einem der Ansprüche 1—13, dadurch gekennzeichnet, daß die Fettsäure Soja ist.

15. DrahtbrennlackMischung nach einem der Ansprüche 1—14, dadurch gekennzeichnet, daß das zur Herstellung der genannten Polyester-Amid-Imid-Komponente benutzte Diamin Metaphenyldiamin ist.

16. Methode zur Herstellung einer Polyester-Amid-Imid Drahtbrennlack-Mischung, gekennzeichnet durch Erhitzen und Mischen der Mischungsbestandteile gemäß den vorstehenden Ansprüchen von 80 auf 90°C.

13